Europäisches Patentamt

European Patent Office

Office européen des brevets

(11) Veröffentlichungsnummer: **0 557 857 A1**

# EUROPÄISCHE PATENTANMELDUNG

(21) Anmeldenummer: **93102379.0**

(51) Int. Cl.⁵: **H04N 7/14**

(22) Anmeldetag: **16.02.93**

(30) Priorität: **22.02.92 DE 4205417**

(43) Veröffentlichungstag der Anmeldung:
**01.09.93 Patentblatt 93/35**

(84) Benannte Vertragsstaaten:
**AT BE CH DE ES FR GB IT LI NL SE**

(71) Anmelder: **Alcatel SEL Aktiengesellschaft
Lorenzstrasse 10
D-70435 Stuttgart(DE)**

(72) Erfinder: **Köhler, Günter
Bussardweg 7
W-7312 Kirchheim(DE)**
Erfinder: **Reh, Klaus
Panoramastrasse 18
W-7337 Albershausen(DE)**
Erfinder: **Bischoff, Martin
Büchenbronner Strasse 6
W-7333 Ebersbach(DE)**

(74) Vertreter: **Hösch, Günther, Dipl.-Ing. et al
Alcatel SEL AG Patent- und Lizenzwesen
Postfach 30 09 29
D-70449 Stuttgart (DE)**

(54) **Verfahren zum breitbandigen Übertragen von Videosignalen sowie Schaltungsanordnung und Übertragungsanlage dafür.**

(57) Zur Verbesserung der breitbandigen Übertragung von Videosignalen mit hoher Bitrate über einen Übertragungskanal mit vorgegebener, jedoch niedrigerer Bitrate werden aus dem digitalisierten Videosignal (V) in Zeilenabschnitten, die den Bildinhalt nicht nachteilig beeinflussen, insbesondere während des Synchronimpulses, Takte ausgeblendet, ein diesen entsprechender Kennwert erzeugt und mitübertragen und empfangsseitig aus dem Kennwert die Taktzahl ermittelt und dem reduziert übertragenen Videosignal (V*) wieder hinzugefügt. Hierfür ist ein kostengünstiges Schaltungskonzept angegeben.

EP 0 557 857 A1

Fig.1

Die vorliegende Erfindung betrifft ein Verfahren zum breitbandigen Übertragen, Empfangen und Wiedergeben von Videosignalen gemäß dem Oberbegriff des Anspruchs 1 und Schaltungsanordnungen zur Durchführung von Verfahrensabschnitten gemäß dem Oberbegriff der Ansprüche 6 und 8 sowie eine damit ausgerüstete Übertragungsanlage gemäß dem Oberbegriff des Anspruchs 9.

Bei bekannten Verfahren erfolgt die Übertragung von Videosignalen analog. Dabei können erhebliche Qualitätsverluste durch Störungen und Veränderungen der Werte und Kurvenformen der Signale insbesondere über längere Übertragungsstrecken auftreten.

Eine wesentliche Verbesserung ist durch digitale Übertragungsverfahren möglich. Bei derartigen bekannten Verfahren wird das Videosignal digitalisiert und seriell übertragen. Um eine hochauflösende Bildübertragung zu erzielen, muß eine breitbandige Übertragung vorgenommen werden. Hierzu werden vorzugsweise Übertragungsstrecken mit einheitlich festgelegten Bitraten verwendet. Gute Ergebnisse werden derzeit mit einer Bitrate von 139,264 MBit/s erreicht. Die zu übertragende Bildinformation wird hierzu digitalisiert, bitparallel verarbeitet und seriell übertragen. Entsprechend der maximal übertragbaren Bitrate von z.B. 139,264 MBit/s darf die Abtastfrequenz bei Wahl einer bestimmten Bitzahl pro Abtastwert der digitalisierten Signale eine bestimmte Größe nicht überschreiten oder es muß die Bitzahl pro Abtastwert und damit die Auflösung verringert werden.

Mit der vorliegenden Erfindung soll die Aufgabe gelöst werden, bei vorgegebener Übertragungsbitrate auch Videosignale übertragen zu können, die, bedingt durch einen vorgegebenen Abtasttakt und die Bitzahl pro Abtastwert, eine höhere Bitrate besitzen als die Bitrate des Übertragungskanals beträgt.

Gelöst wird diese Aufgabe durch die im Kennzeichen des Verfahrensanspruchs 1 angegebenen Verfahrens-Merkmale und die in den Kennzeichen der Ansprüche 6 und 8 angegebenen Schaltungsmerkmale. Durch diese Maßnahmen ist auch bei höherer Bitrate des digitalisierten Videosignals als der Übertragungskanal zuläßt, eine einwandfreie breitbandige Übertragung des gesamten Videosignals möglich, indem die zu übertragende Bitrate z.B. bis zu wenigstens 18% reduziert werden kann, ohne den Informationsinhalt nachteilig zu beeinflussen.

Schaltungstechnisch kann dies durch einfache, z.T. handelsübliche und damit kostengünstige integrierte Schaltungen realisiert werden. zum Teil können sendeseitig und empfangsseitig die gleichen Schaltungen und damit die gleichen IC's, z.B. Taktgeneratoren, verwendet werden. Die Verwendung dieses Verfahrens und der handelsüblichen IC's ermöglicht einen kostengünstigen Aufbau von Übertragungsanlagen, z.B. für Bildtelefone.

Weitere vorteilhafte Ausgestaltungen der Erfindung sind in den Unteransprüchen enthalten und nachfolgend anhand der in der Zeichnung veranschaulichten Ausführungsbeispiele beschrieben. Es zeigen:

Fig. 1      ein Gesamtschaltbild zum Durchführen des Verfahrens,

Fig. 2 bis 5      einen den Synchronimpuls und den Burst enthaltenden Ausschnitt des digitalen Videosignals,

Fig. 6      ein Gesamtschaltbild mit einem zusätzlichen Multiplexer zur Übertragung weiterer Daten und

Fig. 7      ein Gesamtschaltbild mit einem 8-Bit A/D- und D/A-Wandler.

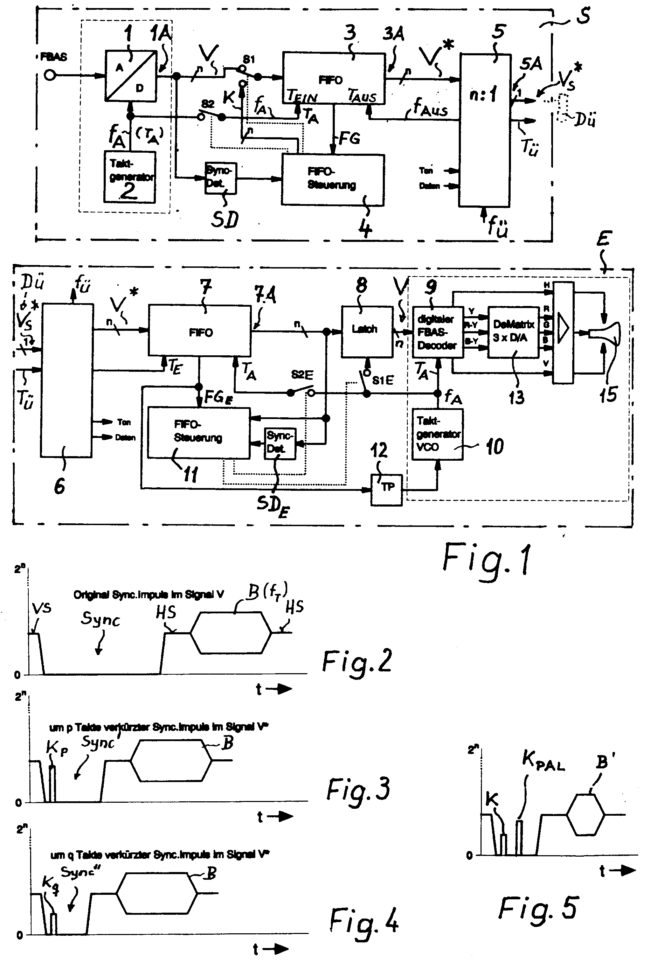

In Fig. 1 ist die Gesamtschaltung zur Durchführung des erfindungsgemäßen Verfahrens dargestellt, die aus der Sendegrundschaltung S und der Empfangsgrundschaltung E besteht, wie anhand der strichpunktierten Linien veranschaulicht. Diese können bei Übertragungsanlagen mit Bildtelefon oder Bild- und Ton-Überwachung etc. in einem Endgerät untergebracht sein.

Die Sendegrundschaltung S besitzt einen Video-Analog/Digitalwandler 1, der von einem Taktgenerator 2 mit der Abtastfrequenz $f_A$ getaktet wird (Takt $T_A$). Ein dem A/D-Wandler 1 zugeführtes analoges Videosignal, z.B. das FBAS-Signal gemäß internationaler Norm, wird mit der Taktfrequenz in n-Bit breite digitale Abtastwerte gewandelt. Am Ausgang 1A des A/D-Wandlers 1 steht dann das digitalisierte Videosignal V bitparallel zur Verfügung. Die Bitrate desselben beträgt daher $BRE_V = f_A \cdot nBit$.

Das Videosignal V wird über eine steuerbare Umschalteinrichtung S1 in einen als FIFO arbeitenden Pufferspeicher 3 mit der Abtastfrequenz $f_A$ eingelesen. Der entsprechende Takt $T_A$ wird über eine steuerbare Schalteinheit S2 dem Takteingang $T_{EIN}$ des FIFO 3 zugeführt.

Das FIFO 3 wird mit dem Auslesetakt $T_{AUS}$ ausgelesen, der von der Taktfrequenz $f_Ü$ eines Übertragungskanals abgeleitet wird. Beim Ausführungsbeispiel wird diese dadurch gewonnen, daß die Taktfrequenz $f_Ü$ durch die Bitzahl pro Abtasttakt des digitalen Videosignals geteilt wird. Da der Auslesetakt $T_{AUS}$ langsamer ist als derjenige am Takteingang $T_{EIN}$, also langsamer als $T_A$, nimmt der Füllgrad des FIFO 3 ständig zu. In Abhängigkeit vom Füllgrad des FIFO 3, z.B. bei HFF (half full flag), gibt das FIFO 3 ein Füllgrad-Signal FG an eine Steuereinheit 4 aus. Über die Steuereinheit 4 wird der Füllgrad des FIFO 3 konstant gehalten, indem diese die Schalteinheit S2 ansteuert und den Takt $T_A$ und somit das Einlesen von Daten des Videosignals V in das FIFO 3 sperrt, bis der Füllgrad nach Überschreiten bzw. Unterschreiten des Sollwertes wieder erreicht ist.

Um aus dem Videosignal V keine den Bildinhalt verändernden Signale auszublenden, wird dem FIFO 3 über einen Synchronimpuls-Detektor SD z.B. der horizontale Synchronimpuls des Videosignals V zugeführt und der Takt $T_A$ über die Schalteinheit S2 während dieses Impulses gesperrt.

In der Steuereinheit 4 wird außerdem ein der Zahl der ausgeblendeten Takte $T_A$ entsprechendes n-Bit breites Kennwort K generiert, das mit dem letzten Takt vor dem Sperren des Abtast- bzw. Einlesetaktes $T_A$ durch Umsteuerung der Umschalteinrichtung S1 in das FIFO 3 eingelesen wird Dieses Kennwort K dient dazu, empfangsseitig die Zahl der ausgeblendeten Takte zu erkennen und dem erhaltenen Signal wieder zuzufügen, um wieder ein vollständiges Videosignal zu erhalten.

Am Ausgang 3A des FIFOs 3 steht somit ein um die Takte p oder q reduziertes Videosignal V* in n-Bit Breite mit der Auslesetaktfrequenz $f_{AUS}$ zur Verfügung, das zusätzlich noch das Kennwort K enthält. Dieses wird in einen n:1 Multiplexer 5 eingegeben, der mit der Taktfrequenz $f_ü$ des Übertragungssystems getaktet wird. Am Datenausgang 5A des Multiplexers 5 wird das reduzierte, mit dem Kennwort K gefüllte Videosignal $V_s$* seriell ausgegeben und über geeignete elektrische und/oder optische Übertragungsmittel DÜ, wie z.B. Optokoppler, in eine Übertragungsleitung eingekoppelt.

Die Figuren 2 bis 4 veranschaulichen die Reduzierung des Videosignals im Bereich des Synchronimpulses einer TV-Zeile, und zwar Fig. 2 den Originalimpuls mit der vorderen Schwarzschulter VS, den eigentlichen Synchronimpuls Sync, der hinteren Schwarzschulter HS mit dem Burst B, also der Farbträgerfrequenz $f_T$. In Fig. 3 ist ein um p Takte reduzierter Synchronimpuls Sync' mit dem eingefügten Kennwort $K_p$ dargestellt, der mit dem digitalisierten, um p Takte reduzierten und mit dem Kennwort K versehenen Videosignal V* bzw. $V_s$* übertragen wird.

Die Fig. 4 zeigt einen noch stärker um q-Takte reduzierten Synchronimpuls Sync'' und einen der Zahl q entsprechenden Kennwort $K_q$.

Somit enthält das übertragene bzw. zu übertragende Videosignal $V_s$* bzw. V* alle Informationen, um empfangsseitig wieder das originale Videosignal V zu generieren. Dies geschieht mit der Grundschaltung E der Fig. 1.

Das übertragene serielle, reduzierte und mit dem Kennwert K versehene Videosignal $V_s$* wird über eine Datenübertragungseinrichtung DÜ, z.B. einen Optokoppler, in einen im Aufbau dem senderseitigen Multiplexer 5 entsprechenden Demultiplexer 6 (n/1), der aus dem ankommenden Signal das bitparallele, reduzierte und mit dem Kennwort K versehene Videosignal V* generiert und mit dem aus dem Takt $T_Ü$ mit der Frequenz $f_Ü$ abgeleiteten Takt $T_E$ in einen als FIFO arbeitenden Pufferspeicher 7 eingelesen. Er wird anschließend über einen Zwischenspeicher 8 einem in der Zeichnung nicht dargestellten Digital/Analog-Wandler oder dem dargestellten digitalen FBAS Decoder 9, eingegeben und mit einem von einem Taktgenerator 10 erzeugten Auslesetakt $T_A$ der Frequenz $f_A$ in analoge Signale gewandelt. Die Auslesefrequenz $f_A$ entspricht genau der sendeseitigen Abtastfrequenz $f_A$ des Taktgenerators 2.

Der Zwischenspeicher 8 wird über eine steuerbare Schalteinrichtung S1E und das FIFO 7 über eine steuerbare Schalteinheit S2E mit der Frequenz $f_A$ des Taktgenerators 10 getaktet. Die Ansteuerung der Schalteinrichtung S1E und der Schalteinheit S2E erfolgt über eine Steuereinheit 11. Diese erhält vom FIFO 7 ein Füllgradsignal $FG_{E'}$ das gleichzeitig über einen Tiefpaß 12 dem Taktgenerator 10 zur Frequenzregelung zugeführt wird. Der Steuereinheit 11 wird außerdem das aus dem FIFO 7 ausgelesene Videosignal V* einmal direkt und außerdem über einen Synchronimpuls-Dekoder $SD_E$, der z.B. den horizontalen Synchronimpuls detektiert, verbunden.

Die Steuereinheit 11 erkennt, wenn am Ausgang 7A des FIFO 7 der horizontale Synchronimpuls des Videosignals V* erscheint, dekodiert das in diesem enthaltene Kennwort K, z.B. $K_p$ oder $K_q$, sperrt durch Öffnen der Schalteinrichtung S1E das Einlesen des Kennwortes K in den Zwischenspeicher 8 und sperrt anschließend durch Öffnen der Schalteinheit S2E für die aus dem Kennwort K ermittelte Taktzahl (z.B. p oder q) das Auslesen des FIFO 7. Während dieser Takte (z.B. p oder q) wandelt der D/A-Wandler bzw. der digitale FBAS-Decoder 9 mit jedem Takt $T_A$ den zuletzt im Zwischenspeicher 8 gespeicherten Amplitudenwert des Synchronimpulses Sync' bzw. Sync'' und ergänzt so den Impuls auf die ursprüngliche Länge des Synchronimpulses und damit das ausgegebene Videosignal V auf seine ursprünglichen Werte. Die empfangsseitige Grundschaltung E funktioniert also analog der sendeseitigen Grundschaltung S, nur in umgekehrter Folge. Für beide Grundschaltungen S und E können daher zum Teil die gleichen integrierten Schaltungen eingesetzt werden. Da derartige IC's z.B. für die PAL-Fernsehnorm im Handel erhältlich sind, kann das Sende-, Übertragungs- und Empfangsverfahren durch kostengünstigen Schaltungsaufbau realisiert werden. Durch Anwendung des FBAS-Decoder-Konzepts erhält man empfangsseitig statt des FBAS-Ausgangssignals die dekodierten Komponentenausgänge R, G, B und die Ansteuerimpulse H und V für die Endstufen eines Monitors 15, z.B. bei Bildtelefonen.

Zur weiteren Reduzierung der zu übertragenden Bitrate eines Videosignals ist es zusätzlich möglich, eine Reduzierung der hinteren Schwarzschulter HS oder des darin übermittelten Burst B vorzunehmen. Bei Reduzierung des Burst B wird dann bei der PAL-Version außer der ausgeblendeten Taktzahl auch die im Burst B enthaltene Amplitude und PAL-Phase als weiteres Kennwort $K_{PAL}$ z.B. während des Synchronimpulses Sync, Sync' oder Sync'' mitübertragen und empfangsseitig wieder generiert. Ein derartig reduzierter horizontaler Zeilensynchronimpuls ist in Fig. 5 dargestellt.

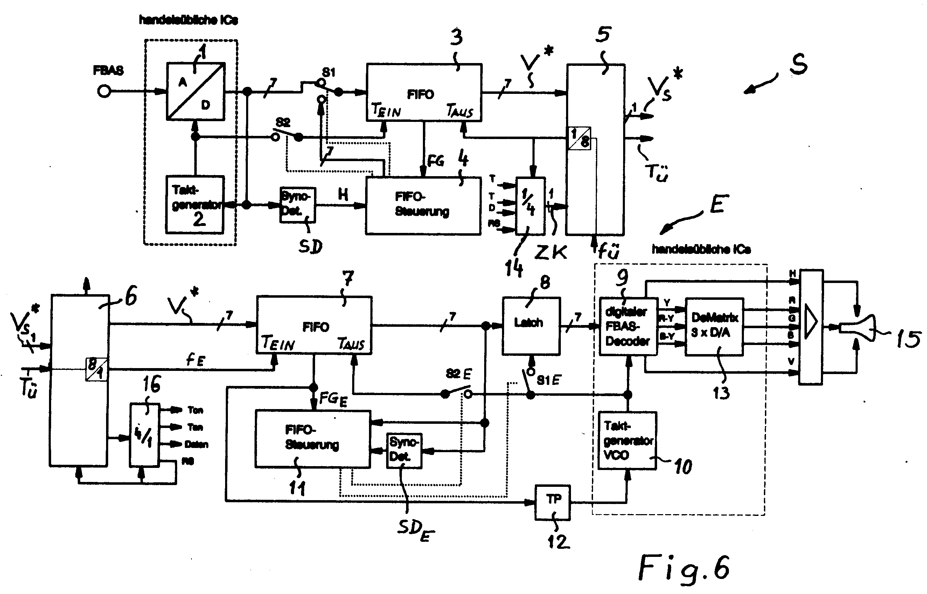

Bei dem in Fig. 6 dargestellten Schaltungsbeispiel unter Anwendung eines handelsüblichen FBAS-Decoder-Konzepts ist z.B. die Abtastfrequenz $f_A$ gleich der vierfachen Farbhilfsträgerfrequenz des Videosignals, also $4 \cdot 4{,}43.. = 17{,}732...$MHz. Da der entsprechende A/D-Wandler 7 Bit breite Abtastwerte liefert ($n = 7$), beträgt die Bitrate $7 \cdot 17{,}732 = 124{,}124$ MBit/s.

Um über einen Zusatzkanal ZK weitere Informationen und Daten, z.B. zwei Tonkanäle T, einen Datenkanal D und einen Rahmensync RS, mit dem Videosignal übertragen zu können, wird ein Multiplexer 5 mit eingangsseitig höherer Bitzahl, z.B. 8 Bit, gewählt und die zusätzlichen Kanäle über einen Multiplexer 14 über den Zusatzkanal ZK mit übertragen. Die Bitrate des reduzierten, mit dem Kennwert K versehenen Videosignals V* - wenn die der Übertragungsstrecke z.B. 139,264 MBit/s betragen soll - ist gleich $139{,}264 \cdot 7/8 = 121{,}856$ MBit/s, was $17{,}408 . 10^5$ Abtastwerte zu je 7 Bit/s entspricht. Die Differenz zur Bitrate des Eingangs-Videosignals V beträgt daher $17{,}732 - 17{,}408 = 0{,}324 . 10^6$ Abtastwerte zu 7 Bit/s. Auf eine TV-Zeile der CCIR-Norm, bezogen also $0{,}324 . 10^6$ : 25 Bilder/s : 625 Zeilen/Bild = 20,74 Abtastwerte à 7 Bit/Zeile. Dementsprechend werden vom FIFO 3 für den Kennwert p der Wert 20 und für den Kennwert q der Wert 21 gewählt.

Der analoge Vorgang in umgekehrter Folge läuft dann empfangsseitig ab. Entsprechend ist ein 8:1 Demultiplexer 6 und ein z.B. 4:1 Demultiplexer 16 vorgesehen.

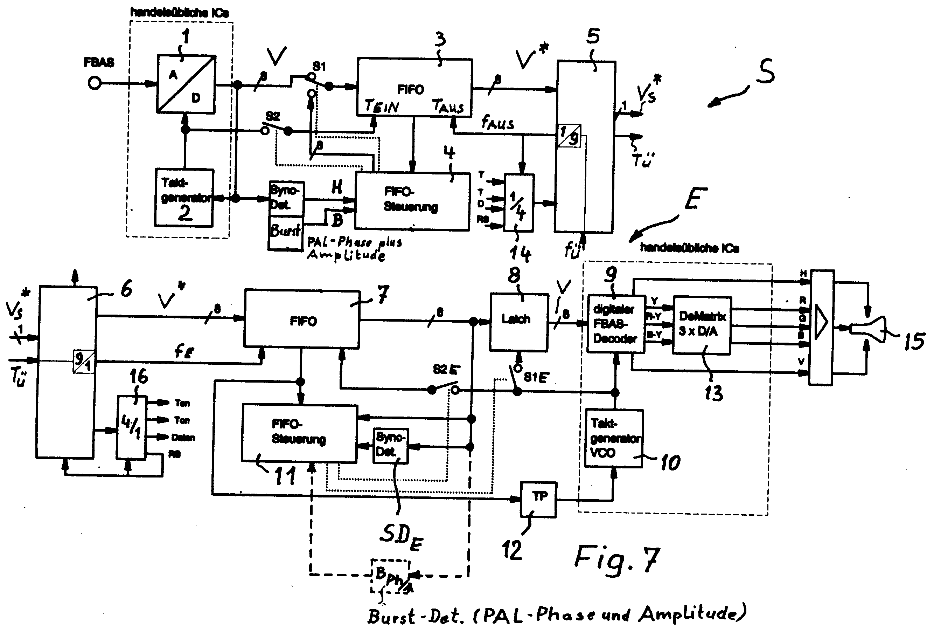

Die Fig. 7 zeigt ein Ausführungsbeispiel für ein digitales, farbträgergekoppeltes FBAS-Decoder-Konzept mit 8 Bit breiten Abtastwerten und dementsprechend 8 Bit breitem Videosignal V. Als Abtastfrequenz wird wieder die vierfache Farbhilfsträgerfrequenz, also 17,732 MHz, gewählt. Dies ergibt eine Bitrate von $17{,}732$ MHz $\cdot 8$ Bit $= 141{,}856$ MBit/s. Die übertragene Videobitrate V* für eine Übertragungsstrecke mit 139,264 MBit/s beträgt dann $139{,}264$ MBit/s $\cdot 8/9 = 123{,}790$ MBit/s. Als Differenz der beiden Bitraten erhält man $141{,}856 - 123{,}790 = 18{,}066$ MBit/s oder, wieder auf eine TV-Zeile bezogen, 144,5 Abtastwerte, die aus dem Videosignal V im FIFO 3 ausgeblendet werden müssen. Dies entspricht einer Zeit von $144{,}5 \cdot 1/17{,}732$ MHz $= 8{,}15 \mu$s.

Da der horizontale Synchronimpuls des Videosignals nur $4{,}7 \mu$s lang ist, werden in diesem Fall noch zusätzlich Takte im Farbhilfsträger-Burst unterdrückt, wie in Fig. 5 angedeutet. Dabei werden in einem generierten Kennwert $K_{PAL}$ die charakteristischen Werte des Burst, nämlich Amplitude und PAL-Phase, zusammen mit der im Burst unterdrückten Taktzahl übertragen, so daß empfangsseitig das FIFO 7 und die Steuereinhneit 11 das ursprüngliche Videosignal V rekonstruieren können.

## Patentansprüche

1. Verfahren zum breitbandigen Übertragen, Empfangen und Wiedergeben von mittels einer Taktfrequenz digitalisierten Videosignalen, wobei die Übertragung über eine digitale Schnittstelle erfolgt, deren Übertragungs-Taktfrequenz sich von der zur Digitalisierung der Videosignale verwendeten Taktfrequenz unterscheidet, **dadurch gekennzeichnet,** daß dem digitalisierten Videosignal (V) bei kleinerer Übertragungs-Taktfrequenz ($f_{\ddot{U}}$) als die Digitalisierungs-Taktfrequenz ($f_t$) während wenigstens einer Austastlücke des Videosignals (V) eine dem Taktunterschied entsprechende Anzahl von Takten ausgeblendet wird und vor der Übertragung wenigstens ein Kennwort (K) zugefügt wird, das entsprechend der Anzahl der ausgeblendeten Takte modifiziert wird und nach der Übertragung empfangsseitig aus dem wenigstens einen Kennwort (K) diese Anzahl ausgelesen und dem übertragenen Signal die unterdrückten Takte der bzw. wenigstens einer Austastlücke hinzugefügt werden, und daß anschließend die Umwandlung in die zur Wiedergabe geeigneten Analogwerte erfolgt.

2. Verfahren nach Anspruch 1, dadurch gekennzeichnet, daß die Ausblendung der Takte während der vertikalen Austastzeit des Videosignals (BAS; FBAS) durchgeführt wird.

3. Verfahren nach Anspruch 1 oder 2, dadurch gekennzeichnet, daß die Ausblendung während des Zeilensynchronimpulses durchgeführt wird.

4. Verfahren nach Anspruch 1, 2 oder 3, dadurch gekennzeichnet, daß die Ausblendung während des Burst (Farbträgerübertragung) erfolgt und zusätzlich ein Kennwort erzeugt wird, das außer der aus dem Burst (B) ausgeblendeten Taktzahl die charakteristischen Daten des Burst (B) enthält, dem digitalisierten Videosignal hinzugefügt wird und empfangsseitig hieraus wieder der ursprüngliche Burst (B) generiert wird.

5. Verfahren nach einem der Ansprüche 1 bis 4, dadurch gekennzeichnet, daß die Digitalisierungs-Taktfrequenz ($f_t$) aus einem Synchronisiersignal des Videosignals (BAS; FBAS) gewonnen wird, indem die aus dem Synchronisiersignal gewonnene Frequenz mit einem Multiplikator multipliziert wird, so daß sich eine höhere Digitalisierungs-Taktfrequenz ($f_A$) als die Übertragungs-Taktfrequenz ($f_Ü$) ergibt.

6. Schaltungsanordnung zum Durchführen der sendeseitigen Verfahrensschritte des Verfahrens nach Anspruch 1 oder den folgenden, **dadurch gekennzeichnet,** daß ein Taktgenerator (2) vorgesehen ist, der aus einem Synchronimpuls des Videosignals, nämlich entweder dem Farbträger oder der Zeilenfrequenz ($f_H$) des Videosignals (FBAS) eine Abtastfrequenz ($f_A$) erzeugt, mit der über einen Analog-Digital-Wandler (1) das Videosignal (FBAS) digitalisiert wird und das digitalisierte Videosignal (V) eine höhere Bitrate besitzt als der im Übertragungssystem verfügbare Videokanal (V*), daß der Ausgang des A/D-Wandlers (1) über eine steuerbare Umschalteinrichtung (S1) mit einem Pufferspeicher (3) vom Typ FIFO verbunden ist, dessen Takteingang ($T_{EIN}$) über eine steuerbare Schalteinheit (S2) mit dem Ausgang des Taktgenerators (2) und an dessen Taktausgang ($T_{AUS}$) die aus dem Übertragungstakt ($T_ü$) des Übertragungssystems abgeleitete Taktfrequenz ($f_{AUS}$) anliegt, daß ferner eine Steuereinheit (4) vorgesehen ist, die eingangsseitig den Synchronimpuls über einen mit dem Ausgang des A/D-Wandlers (1) verbundenen Synchronimpuls-Detektor (SD) und ein Füllstand-Signal (FG) des Pufferspeichers (3) erhält, und die aus den beiden Eingangssignalen ein Ausgangssignal erzeugt, das über die Schalteinheit (S2) den Takteingang ($T_{EIN}$) des Pufferspeichers (3) für die Taktzahl (p; q) der Differenz der Takte der Abtastfrequenz ($f_A$) und der am Taktausgang ($T_{AUS}$) des Pufferspeichers (3) anliegenden Taktfrequenz ($f_{AUS}$) über eine TV-Zeile sperrt und die ferner ein dieser Taktzahl (p; q) entsprechendes Kennwort (K) erzeugt, das außerhalb der Sperrphase der Steuereinheit (S2) und in einer den Bildinhalt nicht störenden Phase über die Umschalteinrichtung (S1) in den Pufferspeicher (3) eingelesen wird, und daß am Ausgang des Pufferspeichers (3) das taktreduzierte und das Kennwort (K) enthaltende Videosignal (V*) über einen nachgeschalteten Multiplexer (5) seriell ausgebbar ist.

7. Schaltungsanordnung nach Anspruch 6, dadurch gekennzeichnet, daß ein Phasendetektor und ein Amplitudendetektor vorgesehen sind, die aus einem PAL-Videosignal die Phasenlage und Amplitude des zumindest teilweise taktreduzierten Bursts feststellen, und daß ein diesen Daten entsprechendes Kennwort erzeugbar und über die Steuereinheit (4) dem Pufferspeicher (3) eingebbar ist.

8. Schaltungsanordnung zum Durchführen der empfangsseitigen Verfahrensschritte des Verfahrens gemäß einem der Ansprüche 1 bis 5, **dadurch gekennzeichnet,** daß ein von der Übertragungsfrequenz ($f_ü$) getakteter Demultiplexer (6) vorgesehen ist, an dessen Dateneingang das reduzierte und mit dem bzw. den Kennwort(en) (K, Kp, Kq, $K_{PAL}$) versehene digitalisierte Videosignal (V*) anliegt und an dessen mit einem Eingang eines Pufferspeichers (7) vom Typ FIFO verbundenen Datenausgang dieses Videosignal (V*) ansteht und in den Pufferspeicher (7) mit der aus der Übertragungstaktfrequenz ($f_ü$) abgeleiteten Taktfrequenz ($f_E$) des Demultiplexers (6) einlesbar ist, daß ferner eine Steuereinheit (11) vorgesehen ist, an deren einen Eingang der Ausgang des Pufferspeichers (7) direkt und an dessen weiteren Eingang der Ausgang des Pufferspeichers (7) über einen Synchronimpuls-Detektor ($SD_E$) angeschlossen ist, daß der Ausgang des Pufferspeichers (7) über einen Zwischenspeicher (8) mit dem digitalen Eingang eines Digital-Analog-Wandlers oder eines FBAS-Dekoders (9) verbunden ist, daß ein Taktgenerator (10) vorgesehen ist, dessen Ausgang am Takteingang des D/A-Wandlers bzw. Dekoders (9) angeschlossen ist und der über eine steuerbare Umschalteinrichtung (S1E) am Zwischenspeicher (8) und über eine steuerbare Schalteinheit (S2E) am Auslesetakt-Eingang des Pufferspeichers (7) anlegbar ist, daß ein weiterer Eingang der Steuereinheit (11) mit dem ein Füllstand-Signal ($FG_E$) bereitstellenden Ausgang des Pufferspeichers (7) verbunden ist, der außerdem über ein Tiefpaßfilter (12) mit einem Steuereingang des Taktgenerators (10) verbunden ist, und daß die Steuereinheit (11) den Synchronimpuls (Zeilenimpuls) des Videosignals (V) erkennt und das aus dem Synchronimpuls detektierte Kennwort (K; Kp; Kq) dekodiert und die darin enthaltene Zahl (p; q) der ausgeblendeten Takte ermittelt und durch einen Steuerbefehl die Schalteinrichtung (S1E) derart ansteuert, daß das Kennwort (K, Kp, Kq) nicht in den Zwischenspeicher (8) einlesbar ist und anschließend die Schalteinheit (S2E) derart ansteuert, daß sie den Auslesetakt ($T_A$) des Pufferspeichers (7) für eine der Zahl (p; q) entsprechende Anzahl Auslesetakte ($T_A$) der Abtastfrequenz ($f_A$) des Taktgenerators (10) unterdrückt, wobei der Taktgenerator (10) eine der Abtastfrequenz ($f_A$) des sendeseitigen Taktgenerators (2) entsprechende Taktfrequenz ($f_A$) ausgibt, die über ein vom Füllstand des Pufferspeichers (7) abhängiges Signal so geregelt wird, daß der Füllstand des Pufferspeichers (7) konstant bleibt.

9. Übertragungsanlage zum Durchführen des Verfahrens nach einem der Ansprüche 1 bis 5 mit den Schaltungen nach den Ansprüchen 6 bis 8,
   **dadurch gekennzeichnet,** daß die Endgeräte jeweils Audio-Sende- und Wiedergabeeinrichtungen und sowohl die senderseitigen als auch die empfangsseitigen Videosignal-Schaltungsanordnungen enthalten und außerdem sowohl mit einer Bildaufnahmeeinrichtung als auch mit einem Monitor ausgerüstet sind, und daß die von einem Endgerät aufgenommenen Video-, Ton- und sonstige Datensignale zu jeweils einem anderen Endgerät übertragbar und dort auswertbar sind.

10. Übertragungsanlage nach Anspruch 9, gekennzeichnet durch die Verwendung als Bildtelefon.

Fig.1

Original Sync.Impuls im Signal V

VS

Sync

HS

B (f_T)

HS

Fig.2

um p Takte verkürzter Sync.Impuls im Signal V°

K_P

Sync'

B

Fig.3

um q Takte verkürzter Sync.Impuls im Signal V°

K_q

Sync''

B

Fig.4

K

K_{PAL}

B'

Fig.5

Fig.6

Fig. 7

EUROPÄISCHER RECHERCHENBERICHT

Europäisches Patentamt

Nummer der Anmeldung

EP 93 10 2379

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | NACHRICHTENTECHNISCHE BERICHTE Nr. 1, Mai 1984, BACKNANG, DE Seiten 39 - 45 ROLF ARNOLD ET AL 'Codierung der Tonrundfunk- und Farbfernsehsignale' * Seite 42 - Seite 44 * ----- | 1-10 | H04N7/14 |

RECHERCHIERTE SACHGEBIETE (Int. Cl.5 )

H04N

Der vorliegende Recherchenbericht wurde für alle Patentansprüche erstellt

| Recherchenort | Abschlußdatum der Recherche | Prüfer |
|---|---|---|
| BERLIN | 13 MAI 1993 | DUDLEY C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes Dokument

EPO FORM 1503 03.82 (P0403)